(19) Europäisches Patentamt
European Patent Office
Office européen des brevets

(11) **EP 0 472 714 B1**

(12) **EUROPÄISCHE PATENTSCHRIFT**

(45) Veröffentlichungstag und Bekanntmachung des Hinweises auf die Patenterteilung:
**26.08.1998 Patentblatt 1998/35**

(21) Anmeldenummer: **91906639.9**

(22) Anmeldetag: **20.03.1991**

(51) Int Cl.$^6$: **G06F 1/00**, G07F 7/10

(86) Internationale Anmeldenummer:
**PCT/EP91/00542**

(87) Internationale Veröffentlichungsnummer:
**WO 91/14980 (03.10.1991 Gazette 1991/23)**

(54) **VERFAHREN ZUR AUTHENTIFIZIERUNG EINES EINE DATENSTATION BENUTZENDEN ANWENDERS**

PROCESS FOR AUTHENTICATING A USER USING A DATA STATION

PROCEDE D'AUTHENTIFICATION D'UN UTILISATEUR UTILISANT UNE STATION DE DONNEES

(84) Benannte Vertragsstaaten:
**AT BE CH DE DK ES FR GB GR IT LI LU NL SE**

(30) Priorität: **20.03.1990 DE 4008971**

(43) Veröffentlichungstag der Anmeldung:
**04.03.1992 Patentblatt 1992/10**

(73) Patentinhaber: **Siemens Nixdorf Informationssysteme Aktiengesellschaft 33102 Paderborn (DE)**

(72) Erfinder: **GLASCHICK, Rainer D-4790 Paderborn (DE)**

(74) Vertreter: **Epping, Wilhelm, Dr.-Ing. et al Patentanwalt Postfach 22 13 17 80503 München (DE)**

(56) Entgegenhaltungen:
**US-A- 4 549 075        US-A- 4 797 920**

# Beschreibung

Die Erfindung betrifft ein Verfahren zur Authentifizierung eines eine Datenstation benutzenden Anwenders gegenüber einem mit der Datenstation verbundenen Rechnersystem.

Das erfindungsgemäße Verfahren befaßt sich ganz allgemein mit dem Problem der Authentifizierung bei Rechnersystemen, die jeweils mit einer Vielzahl von Datenstationen verbunden sind. Die Datenstationen können dabei Rechner mit Emulationsprogrammien, Personal Computer oder dedizierte Datenstationen sein. Sobald ein Benutzer oder Anwender auf einen Rechner über seine Datenstation zugreifen will, wird er vom Rechner aufgefordert, sich durch ein Paßwort zu authentifizieren. Er übermittelt das Paßwort an die Datenstation, die es als Nachricht zum Rechner überträgt. Das Problem besteht darin, daß ein unberechtigter Benutzer seine Datenstation so modifizieren kann, daß er eine Kopie der von der ersten Datenstation an den Rechner gesandten Nachricht empfängt und aus der Datenstation entnimmt. Danach kann sich der unberechtigte Benutzer anstelle des berechtigten authentifizieren, weil er das Paßwort kennt. Ein weiterer Mangel dieser Art der Authentifizierung liegt darin, daß ein privilegierter Benutzer, der unbeschränkten Zugriff auf die Daten im Rechner hat, sich das Paßwort eines Benutzers durch Auslesen aus dem Speicher aneignen kann.

Bei einem ersten bekannten Verfahren zur Authentifizierung wird bei der Paßwortanmeldung das unverschlüsselte Paßwort von der Datenstation des Benutzers dem Rechnersystem übermittelt. Dort wird das Paßwort mittels einer Einwegfunktion verschlüsselt und in einer Datei gespeichert. Bei der Paßwortbenutzung, d.h. bei der Authentifizierung wird dann ebenfalls das im Klartext von der Datenstation zu dem Rechnersystem gesandte Paßwort in dem Rechnersystem durch eine Einwegfunktion verschlüsselt. Als Einwegfunktion wird dabei eine Funktion bezeichnet, die einfach zu berechnen ist, für die jedoch kein Verfahren existiert, um ihre Umkehrfunktion mit vertretbarem Aufwand zu berechnen.

Der resultierende Wert wird anschließend mit dem in der Datei abgespeicherten verschlüsselten Paßwort verglichen. Bei Gleichheit gilt der Benutzer als authentifiziert. Bei diesem Verfahren ist es nicht möglich, durch Auslesen der Paßwortdatei Kenntnis von dem Paßwort zu erlangen. Allerdings kann das im Klartext an das Rechnersystem übermittelte Paßwort abgehört und anschließend mißbräuchlich genutzt werden.

Eine Verbesserung kann erreicht werden, wenn die Authentifizierung im Dialog zwischen der Datenstation und dem Rechnersystem erfolgt. Hierzu wurde bereits vorgeschlagen, ein symmetrisches Chiffrierverfahren einzusetzen. Dabei wird bei der Anmeldung das Paßwort 20 in einer geschützten Datei im Klartext gespeichert. Zur Authentifizierung wird in dem Rechnersystem in einem Zufallszahlengenerator eine Zufallszahl erzeugt, mit einer Verschlüsselungseinheit verschlüsselt und an die Datenstation geschickt. Diese Nachricht wird mit dem dem Benutzer abgeforderten Paßwort mit einem Entschlüssler entschlüsselt, durch eine Addition modifiziert, mit dem Paßwort durch den Verschlüssler verschlüsselt und an das Rechnersystem zurückgeschickt. Im Rechnersystem wird die Nachricht durch einen Entschlüssler entschlüsselt und mit der durch die Addition ebenfalls modifizierten Zufallszahl verglichen, wobei sich im Vergleicher Übereinstimmung ergeben muß. Nachteilig an dieser Lösung ist ebenfalls, daß das Paßwort einem privilegierten Benutzer (Systemverwalter) oder Anlagentechniker zugänglich ist, der die entsprechende Datei auslesen kann. Daher kann das Paßwort auch in diesem Falle gestohlen werden.

Schließlich wurde auch ein Verfahren entwickelt, das vom Benutzer die Aufbewahrung von mindestens zwei Werten verlangt. Diese Schlüssel werden von einer Schlüsselzentrale nach einem bestimmten Verfahren erzeugt und sind daher vom Benutzer nicht frei wählbar, so daß dieser nicht ein mnemotechnisches Paßwort wie in herkömmlichen Paßwortlösungen selbst wählen kann. Da sich der Benutzer aus Sicherheitsgründen das Paßwort nicht aufschreiben darf, ist das Verfahren nur in Verbindung mit Chipkarten praktikabel.

Aus der US-A-4,797,920 ist ein Verfahren zur Authentifizierung bekannt, bei dem das Paßwort zur Identifikation der Zugangsberechtigung zu eine System mithilfe von Zufallszahlen verschlüsselt wird. Der zu verifizierende Schlüssel wird bei beiden Teilnehmerstationen im Klartext gespeichert, so daß auf beiden Seiten des Systems Zufallszahlen erzeugt und verknüpft werden müssen. Die Überprüfung der Schlüsseldaten erfolgt auf Seiten des an das System angeschlossenen Terminals.

Die US-A-4,549,075 beschreibt ein Verfahren zu Übertragung von Daten aus einer Informationskarte in eine andere. Zur Datensicherung werden Zufallszahlen und ein geheimer Algorithmus verwendet.

Der Erfindung liegt die Aufgabe zugrunde, ein Verfahren anzugeben, das eine hohe Sicherheit bei einfacher Handhabung bietet.

Diese Aufgabe wird durch die Merkmale des Patentanspruchs 1 gelöst. Gemäß dieser Lösung wird das Paßwort niemals im Klartext über eine der Verbindungsleitungen zwischen der Datenstation und dem Rechnersystem gesandt. Es kann daher auch nicht abgehört und mißbräuchlich benutzt werden.

Eine erhöhte Sicherheit erhält man auch dadurch, daß die Zufallszahl vor ihrer Übermittlung an die Datenstation durch eine Einwegfunktion verschlüsselt wird. Um unter den vorstehend beschriebenen Voraussetzungen auf einfache Weise im Rechnersystem und in der Datenstation Werte zu erzeugen, die miteinander verglichen werden können, ist es vorgesehen, zur Verschlüsselung des Paßwortes und zur Verknüpfung des verschlüsselten Wertes mit der Zufallszahl in dem Rechnersystem einerseits und zur Verschlüsselung der Zufallszahl und ihrer Verknüpfung mit dem verschlüsselten Paßwort in der Datenstation andererseits kommutative Einwegfunktionen zu verwenden, wie dies weiter unten noch näher erläutert wird.

Die Verknüpfungs- und/oder Verschlüsselungsschritte mittels Einwegfunktionen können auch mindestens einmal wiederholt werden.

Um gegen die Vortäuschung eines Rechnersystems (anstelle des tatsächlich vorhandenen Rechnersystems) gesichert zu sein, kann das Verfahren auf gegenseitige Authentifikation erweitert werden, in dem die verschiedenen Verfahrensschritte in dem Rechnersystem und der Datenstation verschachtelt gleichzeitig ablaufen.

Eine andere Weiterbildung ist dadurch gekennzeichnet, daß das Rechnersystem ein Paßwort h verschlüsselt und das Ergebnis v an die Datenstation übermittelt, wo es mit einer in der Datenstation gebildeten Zufallszahl s zu einem Wert $v^s$ verschlüsselt wird, daß die Zufallszahl s verschlüsselt und an das Rechnersystem übermittelt wird, daß aus der verschlüsselten Zufallszahl p und dem Paßwort h des Rechnersystems ein verschlüsselter Wert q gebildet wird, der an die Datenstation übermittelt wird und daß die Beziehung der beiden Werte q und $v^s$ zueinander ausgewertet wird. Durch diese Weiterbildung wird erreicht, daß auch das Rechnersystem authentifiziert wird. Zur Feststellung der Authentität wird dann ein Vergleich der übermittelten verschlüsselten Werte mit den selbst ermittelten Werten sowohl auf der Rechnerseite als auch auf der Anwenderseite durchgeführt. Auch bei dieser gegenseitigen Authentifizierung kann zu keinem Zeitpunkt das geheime Paßwort abgehört werden, da es im Klartext auf den Datenverbindungen nicht auftritt.

Eine Weiterbildung der vorgenannten Ausführungsform ist dadurch gekennzeichnet, daß bei der Übermittlung der verschlüsselten Zufallszahlen x, p jeweils ein Identifizierungskennwert mit übertragen wird. Bevor die Datenkommunikation zwischen dem Rechnersystem und dem Anwender gestattet wird, informiert sich jede Seite durch Nachschlagen in vorher ausgetauschten Listen, ob der jeweilige Identifizierungskennwert eingetragen ist. Fällt die Prüfung positiv aus, so kann der Datenaustausch durchgeführt werden. Durch diese Maßnahmen wird die Sicherheit des Datenverkehrs noch weiter erhöht.

Es besteht auch die Möglichkeit, den durch Verschlüselung des Paßwortes bei der Anmeldung erzeugten Wert, den sogenannten Authentifikator, nicht in dem Rechnersystem abzuspeichern, sondern ihn dem Rechnersystem zusammen mit der Identifikation zu übermitteln, wobei der Authentifikator durch ein Signaturverfahren an sich bekannter Art beglaubigt ist. Damit wird jeder Versuch unterbunden, durch Auslesen der entsprechenden Datei in dem Rechnersystem an den Authentifikator und damit unter Umständen doch noch an das Paßwort zu gelangen.

Die Operationen mit den Schlüsselfunktionen können in einer versiegelten Einheit stattfinden, in der sich der geheime Schlüssel befindet und nicht ausgelesen werden kann. Lediglich der Authentifikator ist in diesem Falle elektronisch oder optisch lesbar. Eine solche Einheit kann beispielsweise als Chipkarte ausgebildet sein.

Als Einwegfunktion kann beispielsweise die diskrete Exponentiation modulo einer ganzen Zahl oder einer Polynomerweiterung eines Zahlenringes verwendet werden. Die mathematischen Grundlagen hierfür sind an sich bekannt. Dabei werden die Berechnungen modulo einer großen Primzahl q ausgeführt, so daß nur die Zahlen von 0 bis ausschließlich dieser großen Zahl q auftreten. Zu diesem Modul wird eine weitere Zahl w bestimmt, die ein primitives Element des Galois-Körpers GF (q) ist. Dies bedeutet, daß die Potenzen $w^i$ von w alle verschieden sind, solange i kleiner als q ist. Da q eine Primzahl ist, ist jede Zahl w q ein primitives Element.

Alternativ hierzu können auch die Rechenverfahren der Polynom-Arithmetik angewendet werden modulo zu einem irreduziblen Polynom vom Grade n. Vor- und Nachteile sind ausreichend in der Literatur besprochen und nicht Gegenstand der vorliegenden Erfindung.

Unter diesen Randbedingungen ist die Funktion $f(x, y) = x^y$ einfach zu berechnen, aber die inverse Funktion $f^{-1}(x,z) = \log_x z$ ist nur mit sehr großem Rechenaufwand berechenbar. Für q ungefähr $2^{200}$ benötigt die Exponentiation ca. 200 Multiplikationen (von 200-Bit Werten). Die besten bekannten Verfahren zur Logarithmusbildung jedoch benötigen $10^9$ Multiplikationen. Damit ist die Eigenschaft einer Einwegfunktion gegeben. Wegen

$$f(f(x,y),z)=(x^y)^z=x^{(y^{*z})}=(x^z)^y=f(f(x,z),y)$$

ist die Exponentiation rechts-kommutativ.

Die folgende Beschreibung erläutert in Verbindung mit den beigefügten Zeichnungen die Erfindung anhand von Ausführungsbeispielen. Es zeigen:

Fig. 1 ein Ablaufschema des erfindungsgemäßen Verfahrens gemäß einer ersten Ausführungsform und

Fig. 2 ein Ablaufschema des erfindungsgemäßen Verfahrens gemäß einer zweiten Ausführungsform,

Fig. 3 eine schematische Darstellung des Ablaufs, bei dem auch das Rechnersystem authentifiziert wird,

Fig. 4 ein Ablaufschema gemäß Fig. 3, bei dem auf Seiten des Rechnersystems und des Anwenders Sitzungsschlüssel zur Authentifizierung gebildet werden, und

Fig. 5 ein Ablaufschema, bei dem die Sitzungsschlüssel nach dem DES-Verfahren gebildet werden.

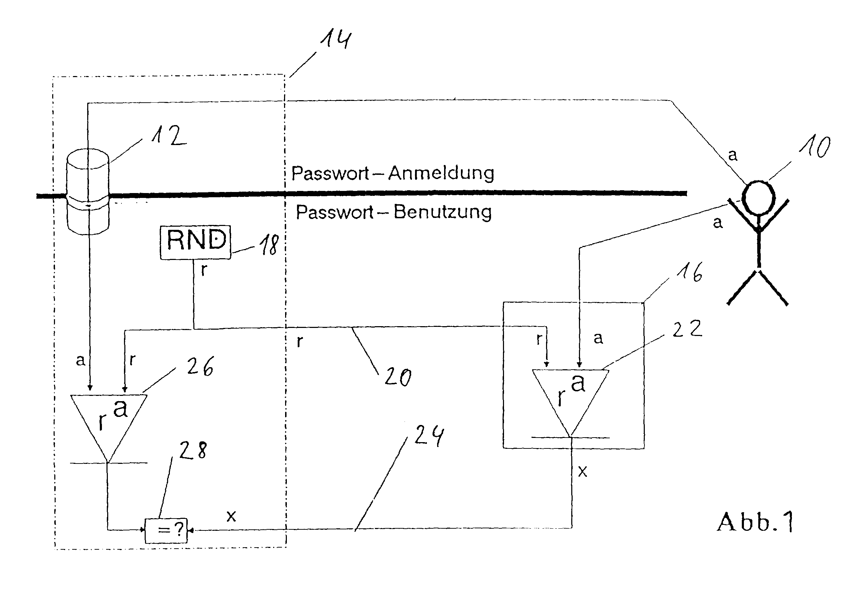

Das in der Figur 1 dargestellte Verfahren soll das Abhören des Paßwortes bei der Authentifizierung verhindern. Es wird dabei zwischen der Paßwortanmeldung, einem einmaligen Vorgang, und der Paßwortbenutzung oder Authentifizierung, einem beliebig wiederholbaren Vorgang, unterschieden. Bei der Paßwortanmeldung wird das vom Benutzer 10 gewählte Paßwort a über einen geschützten Kanal, z.B. durch einen Boten, in eine geheime Datei 12 eines Rechners 14 eingetragen und dort im Klartext gespeichert. Will der Benutzer anschließend eine Leistung des Rechners 14 über eine mit diesem verbundene Datenstation 16 abrufen, so wird seine Berechtigung hierzu überprüft (Authentifizierung). Dies erfolgt in der Weise, daß in einem Zufallsgenerator 18 eine Zufallszahl r gebildet wird, indem beispielsweise die Tageszeit mit der Prozeßnummer multipliziert wird. Diese Zufallszahl r wird über einen Kanal 20 zur Datenstation 16 übertragen. In der Datenstation wird nach Anforderung des Paßwortes a in dem Funktionsrechner 22 die zweistellige Einwegfunktion "modulare Exponentiation" ausgeführt, indem der Wert $x=r^a$ gebildet wird. Dieser Wert x wird über einen Kanal 24 an den Rechner 14 zurückübertragen. Im Rechner 14 wird zeitgleich mit den Vorgängen in der Datenstation 16 unter Verwendung des in der Datei 12 gespeicherten Paßwortes a und der Zufallszahl r in einem Funktionsrechner 26 ebenfalls der Wert $r^a$ gebildet. Dieser Wert und der Wert x werden in einem Vergleicher 28 miteinander verglichen. Bei Gleichheit gilt der Benutzer als authentifiziert. Aus den über die Kanäle 20 und 24 übertragenen Daten kann das Paßwort wegen der Einwegeigenschaft der modularen Exponentiation nicht mit vertretbarem Aufwand ermittelt werden. Damit kann das Paßwort a auch nicht durch Abhören der Verbindung zwischen der Datenstation 16 und dem Rechner 14 ermittelt werden. Allerdings ist das Paßwort im Rechner 14 für einen privilegierten Benutzer zugänglich gespeichert.

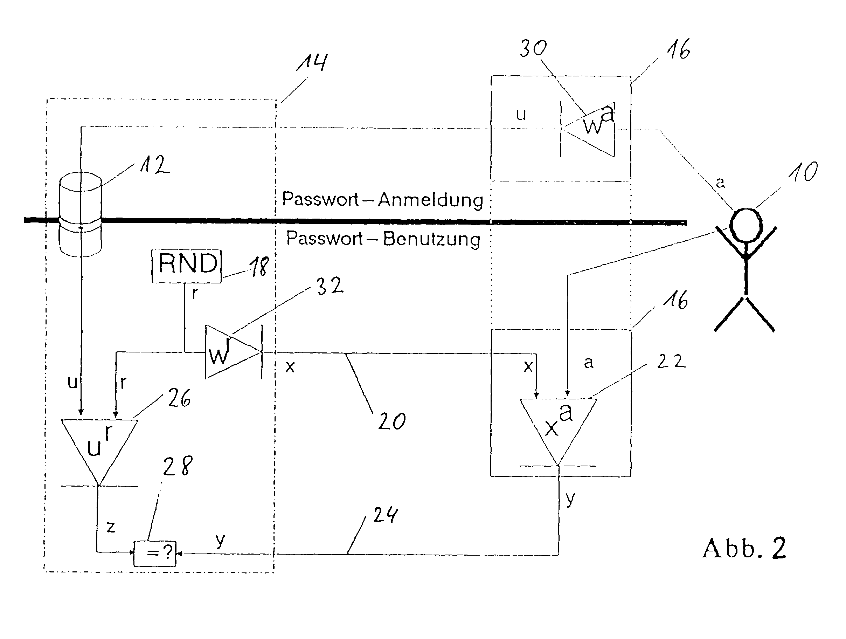

Um auch diese Mißbrauchsquelle zu verstopfen, wurde das Verfahren gemäß Abbildung 2 erweitert. Gleiche Teile sind wiederum mit gleichen Bezugsziffern versehen. Im Gegensatz zu der Lösung gemäß Figur 1 wird das Paßwort bei der Paßwortanmeldung in der Datenstation 16 mittels eines Funktionsrechners 30 durch eine Einwegfunktion verschlüsselt, indem der Authentifikationswert $u=w^a$ berechnet wird. Dieser Authentifikationswert u, der das Paßwort a nur in einer verschlüsselten Form enthält, wird dem Rechner 14 zugeführt und in der Datei 12 gespeichert.

Ferner wird bei der Authentifizierung die Zufallszahl r vor dem Übermitteln an die Datenstation 16 in einem Funktionsrechner 32 verschlüsselt, indem der Wert $x=w^r$ berechnet wird. Dieser verschlüsselte Wert x wird über den Kanal 20 der Datenstation 16 zugeführt.

Bei der Authentifizierung wird dann in dem Funktionsrechner 26 des Rechners 14 der Wert $z=u^r=w^{a*r}$ gebildet. In dem Funktionsrechner 22 der Datenstation 16 wird der Wert $y=x^a=w^{r*a}=w^{a*r}$ gebildet. Man erkennt, daß trotz des unterschiedlichen Berechnungsweges die Funktionen z und y identisch sind. Bei Gleichheit der Werte y und z gilt der Benutzer 10 wieder als authentifiziert. Bei dem Verfahren gemäß Abbildung 2 ist es weder während der Paßwortanmeldung noch während der Paßwortbenutzung möglich, durch Abhören der Kanäle zwischen der Datenstation 16 und dem Rechner 14 das Paßwort a zu ermitteln. Auch die Kenntnis des Inhaltes der Datei 12 führt nicht zur Kenntnis des Paßwortes a. Der Authentifikator u und der Wert w können bekannt sein. Dennoch ist es nicht möglich, mit vernünftigem Aufwand das Paßwort a zu ermitteln.

Die Berechnungen der Datenstation können vollständig in einer Chipkarte realisiert werden, so daß der Benutzer sein Paßwort nicht einer Maschine anvertrauen muß, auf die er keinen Einfluß hat und die manipuliert sein könnte.

Um gegen die Vortäuschung eines Rechnersystems gesichert zu sein, kann das Verfahren leicht auf gegenseitige Authentifizierung erweitert werden, indem die beiden Verfahren gleichzeitig ablaufen und die jeweiligen Nachrichtenblöcke die Informationen beider Verfahren tragen. Die Anzahl der Kommunikationsschritte zwischen dem Rechner und der Datenstation erhöht sich dadurch nicht.

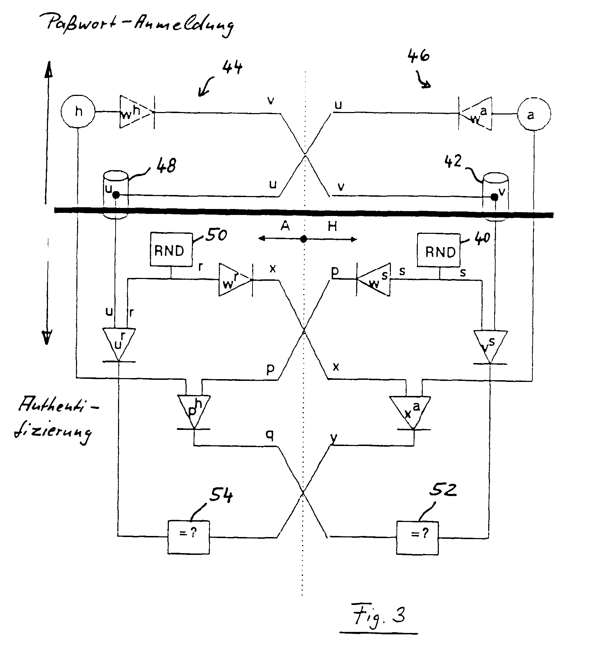

Bei diesem Ausführungsbeispiel, dessen Verfahrensablauf in Figur 3 schematisch dargestellt ist, wählt ein erster Rechner 44, im folgenden als "Host" bezeichnet, ein geheimes Paßwort h. Der für die Kommunikation vorgesehene zweite Rechner, im folgenden als "Anwender" 46 bezeichnet, wählt das geheime Paßwort a. Während der Vorbereitungsphase bildet der Anwender 46 unter Verwendung einer Einwegfunktion den öffentlichen Schlüssel $u = w^a$. Der öffentliche Schlüssel u wird anschließend an den Host 44 übertragen. Ebenso bildet der Host 44 unter Verwendung einer Einwegfunktion den öffentlichen Schlüssel $v = w^h$. Anschließend wird der öffentliche Schlüssel v vom Host 44 an den Anwender 46 übertragen. Der übertragene Schlüssel v wird auf Anwenderseite und der Schlüssel u auf der Seite des Hosts 44 jeweils in vorbestimmten Datenbereichen 48, 42 abgespeichert.

Nachfolgend wird die gegenseitige Authentifikation beschrieben. Zunächst bilden sowohl der Host 44 als auch der Anwender 46 eine Zufallszahl in einem Zufallsgenerator 50 bzw. 40. Gemäß dem Beispiel in Figur 3 auf Seiten des Hosts 44 die Zufallszahl r und auf Seiten des Anwenders 46 die Zufallszahl s. Die Zufallszahl s wird zum Wert $p = w^s$ unter Verwendung einer Einwegfunktion verschlüsselt. Anschließend wird dieser Wert p zusammen mit einer Identifizierung A an den Host 44 übertragen. Analog hierzu wird beim Host 44 verfahren. Er bildet unter Verwendung der Einwegfunktion den Wert $x = w^r$ und überträgt diesen Wert zusammen mit einer Identifizierung H an den Anwender 46.

Jede Seite wendet nun auf den empfangenen Wert x bzw. p ihr geheimes Paßwort a bzw. h an. Dies bedeutet auf Anwenderseite, daß der Wert $y = x^a$ gebildet, und dieser Wert an den Host 44 zurückgesendet wird. Der Host 44 bildet den Wert $q = p^h$ und sendet den Wert q an den Anwender. Auf Anwenderseite wird nun in einem Vergleicherbaustein 52 geprüft, ob der Wert q gleich dem Wert $v^s$ ist. Auf der Seite des Hosts 44 wird in einem anderen Vergleicherbaustein 54 geprüft, ob der Wert y gleich dem Wert $u^r$ ist. Stimmen die vorgenannten Werte überein, so sind Host 44 und Anwender 46 eindeutig authentifiziert.

Um eine einer Authentifizierung nachfolgende Kommunikation zu sichern, z. B. unter Verwendung eines symmetrischen Verfahrens wie das bekannte DES-Verfahren, ist die Verwendung eines Sitzungsschlüssels erforderlich. Ein solcher Schlüssel kann z. B. nach dem Verfahren von Diffie und Hellmann gebildet werden. Nachteilig ist bei diesem bekannten Verfahren jedoch, daß ein Eindringling den Zeitpunkt zwischen Authentifikation abpassen und durch einen aktiven Eingriff die Bildung des Schlüssels zu seinen Gunsten beeinflussen kann. Im nachfolgenden wird ein Verfahren beschrieben, das diesen Nachteil vermeidet und auf das im Zusammenhang mit Fig. 3 beschriebene Verfahren aufbaut. Bei diesem Verfahren wird ein Sitzungsschlüssel aus den bereits ausgetauschten Daten erstellt, so daß dieser von einem Eindringling nicht ermittelt werden kann.

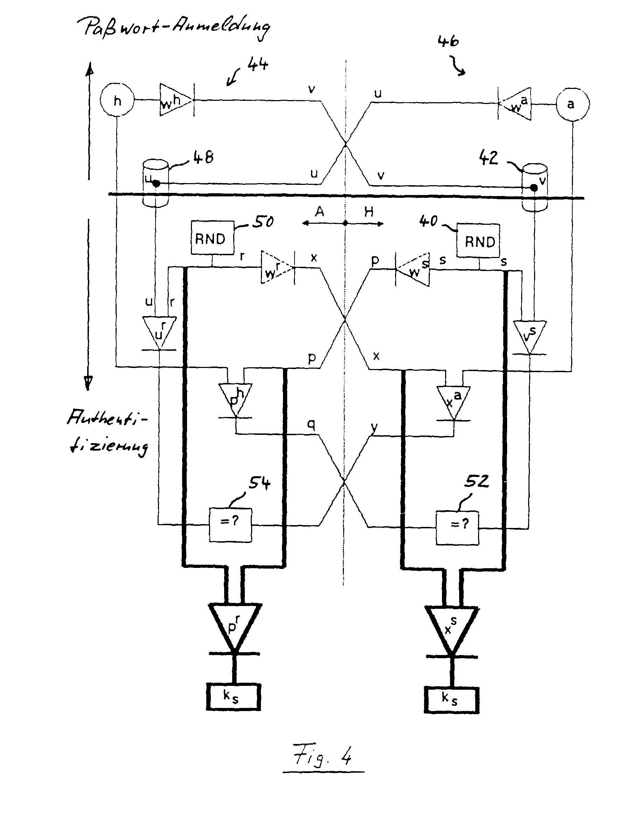

In Fig. 4 ist aufbauend auf die Verfahrensschritte, die im Zusammenhang mit Fig. 3 erläutert worden sind, der Ablauf bei der Bildung eines Sitzungsschlüssels schematisch dargestellt. Gleiche Teile sind in diesen Figuren gleich bezeichnet. Der Host 44 bildet aus den Werten r und p unter Verwendung einer Einwegfunktion den Wert $k_s = p^r = w^{sr}$. Auf analoge Weise bildet der Anwender 46 aus den Werten x und s den Wert $k_s = x^s = w^{rs}$. Die auf beiden Seiten gebildeten Werte $k_s$ stimmen überein. Sie können zur Verschlüsselung der Kommunikation verwendet werden. Einem Eindringling ist es nicht möglich, diesen Sitzungsschlüssel weder durch Belauschen der Datenverbindung zwischen Anwender 46 und Host 44 noch durch einen aktiven Eingriff auf Anwenderseite oder auf der Seite des Hosts 44 zu ermitteln.

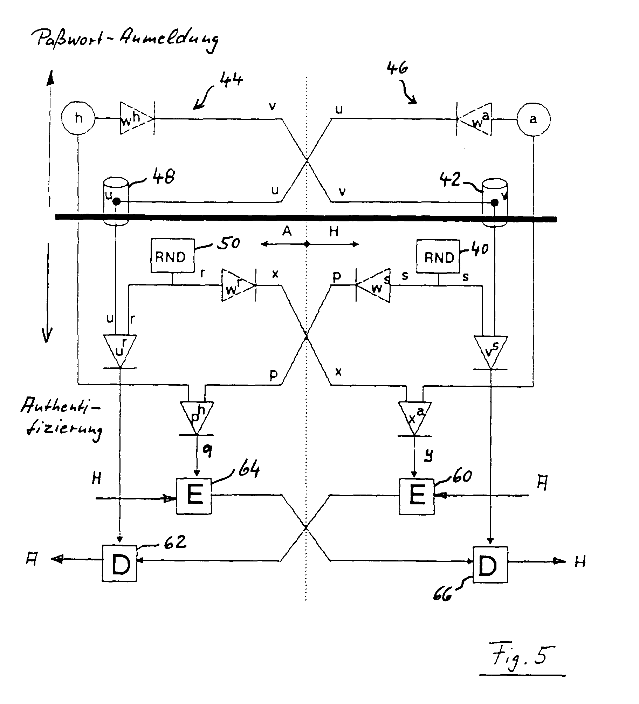

Ist von vornherein bekannt, daß bei der Kommunikation zwischen Host 44 und Anwender 46 eine Sitzungsverschlüsselung zur Authentifizierung erfolgen soll, so kann das vorher beschriebene Verfahren weiter vereinfacht werden. In Figur 5 ist eine solche Weiterbildung schematisch dargestellt. Ausgangspunkt für die in Figur 5 dargestellten Ablaufschritte ist das bereits in Zusammenhang mit Figur 3 beschriebene Verfahren. Die Bezeichnungen der Fig. 3 sind beibehalten worden. Beim Verfahren nach Figur 5 werden die Werte q und y jedoch nicht direkt an die jeweils andere Seite übertragen, sondern als Schlüssel für die symmetrische Sitzungsverschlüsselung verwendet.

Die symmetrische Verschlüsselung nach dem DES-Verfahren findet auf Seiten des Anwenders 46 im Verschlüsseler 60 statt. Als Eingangsgrößen für die dort erfolgende Verschlüsselung wird der Schlüsselwert y und für die Identifizierung des Anwenders 46 sein Name A verwendet.Das Ergebnis der Verschlüsselung wird an den Host 44 zum Entschlüsselungsbaustein 62 gesendet. Dort wird unter Verwendung des Wertes $u^r$ die Entschlüsselung des übersendeten Ergebnisses vorgenommen und der Wert A, d.h. die Identifizierung des Anwenders 46, zurückgewonnen. Der Host 44 vergleicht dann diesen Wert A mit ihm bekannten Werten in einer Identifikationsliste und stellt die Authentität des Anwenders 46 fest.

In analoger Weise wird die Authentität des Host 44 auf der Anwenderseite festgestellt. Im Verschlüsseler 64 wird der verschlüsselte Wert q mit der Hostidentifizierung H nach dem DES-Verfahren verschlüsselt und das Ergebnis dem anwenderseitigen Entschlüsselungsbaustein 66 zugesendet. Dieser entschlüsselt die ihm zugesendete Information unter Verwendung des verschlüsselten Wertes $v^s$ und gewinnt die Hostidentifizierung H zurück. Bei diesem Verfahren erscheinen die Schlüssel zu keinem Zeitpunkt im Klartext auf der Datenleitung, so daß die verwendeten Sitzungsschlüssel für Außenstehende geheim bleiben.

Während der Vorbereitungsphase, in der der Anwender 46 den Wert u an den Host 44 übermittelt und dort gespeichert wird, kann in einer anderen Weiterbildung das Wertepaar, bestehend aus dem Namen A und dem Paßwort a mit einer digitalen Unterschrift versehen übermittelt werden, beispielsweise nach dem Schema von El Gamal, das in "A Public Key Cryptosystem and a Signature Scheme Based on Discrete Logarithms", IEEE-IT 31 (1985) , Seiten 469-472, beschrieben ist . Bei der Authentifikation schickt dann der Anmelder zusammen mit seinem Namen A auch das zertifizierte Paket (A, a) cert. Diese Verfahrensvariante ist nützlich, wenn ein Anwender mit mehreren verschiedenen Rechnersystemen kommuniziert. Dann wird der Authentifikator durch eine Zulassungsstelle versiegelt.

**Patentansprüche**

1. Verfahren zur Authentifizierung eines eine Datenstation (16) benutzenden Anwenders gegenüber einem mit der Datenstation (16) verbundenen Rechnersystem (14), bei dem im Rechnersystem (14) mittels eines dort für den Anwender gespeicherten Kennwortes (u) und einer im Rechnersystem erzeugten Zufallszahl r ein erster Wert z und in der Datenstation (16) mittels des vom Anwender eingegebenen Paßwortes a unter Einbeziehung der Zufallszahl r ein zweiter Wert y ermittelt und die Beziehung der beiden Werte z, y zueinander im Rechnersystem ausgewertet wird, wobei das Paßwort a vor seiner ersten Übermittlung an das Rechnersystem (14) und seiner Speicherung als verschlüsseltes Kennwort (u) in diesem durch eine Einwegfunktion (30) verschlüsselt wird, und wobei die Zufallszahl r vor ihrer Übermittlung an die Datenstation (16) durch eine Einwegfunktion (32) zu einer Zufallszahl x verschlüsselt wird, die mit dem Paßwort a verknüpft wird, um den Wert y zu ermitteln.

2. Verfahren nach Anspruch 1, dadurch **gekennzeichnet,** daß zur Verschlüsselung des Paßwortes a und zur Verknüpfung des verschlüsselten Wertes u mit der Zufallszahl r einerseits und zur Verschlüsselung der Zufallszahl r und ihrer Verknüpfung mit dem unverschlüsselten Paßwort a andererseits kommutative Einwegfunktionen verwendet werden.

3. Verfahren nach Anspruch 1 oder 2, dadurch **gekennzeichnet,** daß die Verknüpfungs- und/oder Verschlüsselungschritte mittels Einwegfunktionen mindestens einmal wiederholt werden.

4. Verfahren nach einem der Ansprüche 1 bis 3, dadurch **gekennzeichnet**, daß als Einwegfunktion die diskrete Exponentiation modulo einer ganzen Zahl oder einer Polymererweiterung eines Zahlenringes verwendet wird.

5. Verfahren nach einem der vorhergehenden Ansprüche, dadurch **gekennzeichnet,** daß eine gegenseitige Authentifizierung von Anwender und Rechnersystem nach einem der Ansprüche 1 bis 4 erfolgt, wobei die verschiedenen Verfahrensschritte verschachtelt gleichzeitig ablaufen.

6. Verfahren nach einem der vorhergehenden Ansprüche, dadurch **gekennzeichnet**, daß das Rechnersystem (44) ein Paßwort h verschlüsselt und das Ergebnis v an die Datenstation (46) übermittelt, wo es mit einer in der Datenstation (46) gebildeten Zufallszahl s zu einem Wert $v^s$ verschlüsselt wird, daß die Zufallszahl s verschlüsselt und an das Rechnersystem (44) übermittelt wird, daß aus der verschlüsselten Zufallszahl p und dem Paßwort h des Rechnersystems (44) ein verschlüsselter Wert q gebildet wird, der an die Datenstation (46) übermittelt wird, und daß die Beziehung der beiden Werte q und $v^s$ zueinander ausgewertet wird.

7. Verfahren nach Anspruch 6, dadurch **gekennzeichnet,** daß zum Verschlüsseln Einwegfunktionen verwendet werden.

8. Verfahren nach Anspruch 6 oder 7, dadurch **gekennzeichnet**, daß bei der Übermittlung der verschlüsselten Zufallszahlen x, p jeweils ein Identifizierungskennwert (H bzw. A) mit übertragen wird.

9. Verfahren nach einem der Ansprüche 6 bis 8, dadurch **gekennzeichnet**, daß im Rechnersystem (44) aus der Zufallszahl r und der von der Datenstation (46) übermittelten verschlüsselten Zufallszahl p ein durch eine Einwegfunktion verschlüsselter Wert $k_s = p^r$ gebildet wird, der als Sitzungsschlüssel verwendet wird.

10. Verfahren nach Anspruch 9, dadurch **gekennzeichnet**, daß in der Datenstation (46) aus der Zufallszahl s und der vom Rechnersystem (44) übermittelten verschlüsselten Zufallszahl x ein durch eine Einwegfunktion verschlüsselter Wert $k_s = x^s$ gebildet wird, der als Sitzungsschlüssel verwendet wird.

11. Verfahren nach einem der Ansprüche 6 bis 8, dadurch **gekennzeichnet,** daß der zweite Wert y vor seiner Übermittlung an das Rechnersystem (44) mit einer Anwenderidentifikation (A) nach dem DES-Verfahren verschlüsselt und im Rechnersystem (44) unter Verwendung des ersten Wertes z, $u^r$ entschlüsselt wird, und daß der verschlüsselte Wert q des Rechnersystems (44) vor seiner Übermittlung an die Datenstation (46) mit einer Rechnersystemidentifikation (H) nach dem DES-Verfahren verschlüsselt und in der Datenstation (46) unter Verwendung des Wertes $v^s$ entschlüsselt wird.

12. Verfahren nach einem der vorhergehenden Ansprüche, dadurch **gekennzeichnet**, daß der Authentifikator dem Rechner vom Anwender zusammen mit der Identifikation übermittel wird, wobei der Authentifikator durch ein Signaturverfahren beglaubigt wird.

13. Verfahren nach einem der vorhergehenden Ansprüche, dadurch **gekennzeichnet,** daß die Verschlüsselungsvorgänge in einer versiegelten Einheit (Chipkarte) stattfinden, in der sich der geheime Schlüssel (Paßwort) nicht-auslesbar befindet, wobei lediglich der Authentifikator elektronisch oder optisch lesbar ist.

**Claims**

1. Method for authentication of a user who is using a data station (16) for the purposes of a computer system (14) which is connected to the data station (16), in the case of which method an identification word (u) for the user which is stored in the computer system (14) and a random number r which is produced in the computer system are used in said computer system (14) to determine a first value z, and the password a which is entered by the user is used in the data station (16) together with the random number r to determine a second value y, and the relationship of the two values z, y to one another is evaluated in the computer system, the password a being encrypted by a one-way function (30) before it is first transmitted to the computer system (14) and before it is stored as an encrypted identification word (u) in said computer system, and the random number r being encrypted by a one-way function (32) to form a random number x before it is transmitted to the data station (16), that is to say it is linked to the password a in order to determine the value y.

2. Method according to Claim 1, characterized in that commutative one-way functions are used to encrypt the password a and to link the encrypted value u to the random number r on the one hand, and to encrypt the random number r and to link it to the unencrypted password a on the other hand.

3. Method according to Claim 1 or 2, characterized in that the linking and/or encryption steps by means of one-way functions are repeated at least once.

4. Method according to one of Claims 1 to 3, characterized in that the discrete exponentiation modulo of an integer number or a polymer expansion of a number ring is used as a one-way function.

5. Method according to one of the preceding claims, characterized in that mutual authentication of the user and computer system is carried out according to one of Claims 1 to 4, the various method steps running interleaved at the same time.

6. Method according to one of the preceding claims, characterized in that the computer system (44) encrypts a password h and transmits the result v to the data station (46) where it is encrypted with a random number s formed in the data station (46) to form a value $v^s$, in that the random number s is encrypted and is transmitted to the computer system (44), in that the encrypted random number p and the password h of the computer system (44) are used to form an encrypted value q which is transmitted to the data station (46), and in that the relationship of the two values q and $v^s$ to one another is evaluated.

7. Method according to Claim 6, characterized in that one-way functions are used for encryption.

8. Method according to Claim 6 or 7, characterized in that an identification characteristic value (H or A) is in each case also transmitted, with the transmission of the encrypted random numbers x, p.

9. Method according to one of Claims 6 to 8, characterized in that the random number r and the encrypted random number p transmitted by the data station (46) are used in the computer system (44) to form a value $k_s = p^r$ which is encrypted by a one-way function and is used as the session key.

10. Method according to Claim 9, characterized in that the random number s and the encrypted random number x transmitted by the computer system (44) are used in the data station (46) to form a value $k_s = x^s$ which is encrypted by a one-way function and is used as the session key.

11. Method according to one of Claims 6 to 8, characterized in that, before the second value y is transmitted to the computer system (44), it is encrypted with a user identification (A) in accordance with the DES method, and is decrypted in the computer system (44) using the first value z, $u^r$, and in that, before the encrypted value q of the computer system (44) is transmitted to the data station (46), it is encrypted with a computer system identification (H) in accordance with the DES method, and is decrypted in the data station (46) using the value $v^s$.

12. Method according to one of the preceding claims, characterized in that the authenticator is transmitted to the computer from the user together with the identification, the authenticator being verified by a signature method.

13. Method according to one of the preceding claims, characterized in that the encryption processes take place in a sealed unit (smart card) in which the secret key (password) is stored in a non-legible manner, only the authenticator being legible electronically or optically.

**Revendications**

1. Procédé pour authentifier un utilisateur utilisant une station (16) de données par rapport à un système (14) d'ordinateurs relié à la station (16) de données, dans lequel on détermine, dans le système (14) d'ordinateur, au moyen d'un mot (u) caractéristique qui est enregistré pour l'utilisateur et d'un nombre r aléatoire produit dans le système d'ordinateur, une première valeur z et, dans le poste (16) de données, au moyen du mot de passe a entré par l'utilisateur, avec intégration du nombre r aléatoire, une deuxième valeur y et on exploite dans le système d'ordinateur la relation des deux valeurs z, y l'une avec l'autre, le mot de passe a étant codé dans le système d'ordinateurs par une fonction (30) à sens unique avant sa première transmission au système (14) d'ordinateur et sa mise en mémoire comme mot (u) caractéristique codé, et le nombre r aléatoire étant, avant sa transmission à la station (16) de données, codé par une fonction (32) à sens unique en un nombre x aléatoire qui est combiné au mot de passe a pour déterminer la valeur y.

2. Procédé suivant la revendication 1 caractérisé en ce que, pour coder le mot de passe a et pour combiner la valeur u codée au nombre r aléatoire, d'une part, et pour coder le nombre r aléatoire et pour le combiner au mot de passe a non codé, d'autre part, on utilise des fonctions à sens unique commutatives.

3. Procédé suivant la revendication 1 ou 2, caractérisé en ce que l'on répète au moins une fois les étapes de combinaison et/ou les étapes de codage au moyen de fonctions à sens unique.

4. Procédé suivant l'une des revendications 1 à 3, caractérisé en ce que l'on utilise, comme fonction à sens unique, l'exponentiation directe modulo à un nombre entier ou un élargissement polymère d'un anneau de nombre.

5. Procédé suivant l'une des revendications précédentes, caractérisé en ce qu'une authentification mutuelle de l'utilisateur et du système d'ordinateurs s'effectue suivant l'une des revendications 1 à 4, les diverses étapes opératoires se déroulant en même temps de manière imbriquées.

6. Procédé suivant l'une des revendications précédentes caractérisé en ce que le système (44) d'ordinateurs code un mot de passe h et transmet le résultat v à la station (46) de données, où il est codé en une valeur $v^s$ par un nombre s aléatoire formé dans la station (46) de données, en ce que l'on code le nombre s aléatoire et on le transmet au système (44) d'ordinateur, en ce que l'on forme à partir du nombre p aléatoire codé et du mot de passe h du système (44) d'ordinateurs une valeur q codée qui est transmise à la station (46) de données et en ce que l'on exploite la relation des deux valeurs q et $v^s$ l'une avec l'autre.

7. Procédé suivant la revendication 6, caractérisé en ce que l'on utilise des fonctions à sens unique pour le codage.

8. Procédé suivant la revendication 6 ou 7, caractérisé en ce que lors de la transmission de chaque nombre x, p aléatoire codé, on transmet conjointement une valeur (H) ou (A) caractéristique d'identification associée.

9. Procédé suivant l'une des revendications 6 à 8 caractérisé en ce que, l'on forme dans le système (44) d'ordinateurs, à partir du nombre r aléatoire et du nombre p aléatoire codé, transmis par la station (46) de données, une valeur $k_s = p^r$ qui est codée par une fonction à sens unique et que l'on utilise comme code de session.

10. Procédé suivant la revendication 9, caractérisé en ce que l'on forme dans la station (46) de données, à partir du nombre s aléatoire et du nombre x aléatoire codé transmis par le système (44) d'ordinateurs, une valeur $k_s = x^s$ qui est codée par une fonction à sens unique et qui est utilisée comme code de session.

11. Procédé suivant l'une des revendications 6 à 8, caractérisé en ce que l'on code suivant le procédé DES la deuxième valeur y avant sa transmission au système (44) d'ordinateur par une identification (A) d'utilisateur et, dans le système (44) d'ordinateur, on la décode en utilisant la première valeur z, $u^r$ et en ce que l'on code suivant le procédé DES la valeur q codée du système (44) d'ordinateur avant sa transmission au poste (46) de données par une identification (H) de système d'ordinateur et, dans la station (46) de données, on la décode en utilisant la valeur $v^s$.

12. Procédé suivant l'une des revendications précédentes, caractérisé en ce que l'authentificateur est transmis à l'ordinateur par l'utilisateur conjointement avec l'identification, l'authentificateur étant authentifié par un procédé de signature.

13. Procédé suivant l'une des revendication précédentes, caractérisé en ce que les opérations de codage ont lieu dans une unité scellée (carte à puce) dans laquelle le code secret (mot de passe) se trouve d'une manière qui ne peut pas être lu, seul l'authentificateur pouvant être lu par des moyens électroniques ou optiques.

Abb.1

Passwort–Anmeldung

Passwort–Benutzung

Abb. 2

Paßwort - Anmeldung

Fig. 3

Paßwort-Anmeldung

Fig. 4

Paßwort-Anmeldung

Fig. 5